Europäisches Patentamt

European Patent Office

Office européen des brevets

(11) Publication number: **0 057 672**
A2

# EUROPEAN PATENT APPLICATION

(21) Application number: **82830022.8**

(22) Date of filing: **02.02.82**

(51) Int. Cl.³: **A 47 L 15/42**, **A 47 L 15/23**, **F 16 K 31/36**

(30) Priority: **02.02.81 IT 6713381**

(43) Date of publication of application: **11.08.82**
**Bulletin 82/32**

(84) Designated Contracting States: **DE FR GB NL SE**

(71) Applicant: **INDESIT INDUSTRIA ELETTRODOMESTICI ITALIANA S.p.A., Str. Piossasco Km 17, I-10040 Rivalta Turin (IT)**

(72) Inventor: **Premoli, Marcello, Corso Palestro 6, I-10122 Torino (IT)**

(74) Representative: **Saconney, Piero et al, c/o JACOBACCI-CASETTA & PERANI S.n.c. Via Alfieri, 17, I-10121 Torino (IT)**

(54) **Automatic switching device for energizing rotary commutators in a dish-washing machine.**

(57) An automatic switch device is described for alternately supplying water to the two supply pipes of the rotary manifolds provided with spray nozzles in a dishwashing machine.

The device is housed entirely within the water supply pipes and does not require a control outside of this pipe to effect the switching, being driven by the water flowing in the pipe to rotary manifolds by means of a turbine which rotates to transmit motion, through a gear wheel rigid therewith, to a ring gear rigid with a diagonal, elliptical vane which rotates to obstruct the passage of water to one of the two pipes and operates in such a manner as to switch from one pipe to the other.

The presence of the ring gear is necessary to adjust the number of revolutions of the turbine (determined by the pressure of the water) to the desired frequency of switching.
(Figure 1)

ACTORUM AG

"Automatic switch device for supplying the rotary manifolds' of a dishwashing machine"

The present invention relates to a dishwashing machine comprising a washdown pump having a delivery pipe from which branch at least two supply pipes terminating respectively at at least one lower rotary manifold and at an upper rotary manifold, the manifolds being located in a washing chamber and being provided with spray nozzles, and a switch device for supplying the two pipes alternately, the switching of which is controlled by the flow of water in the delivery pipe.

One of the more pressing problems in designing dishwashing machines is that of achieving the maximum possible saving in the electrical energy needed for the dishwashing cycles. It is already known to supply alternately the two pipes carrying water to the rotary manifolds. In this manner, the washing efficiency for a given duration of the washing cycle is not compromised, while the quantity of water necessary is reduced and the use of a washdown pump with a smaller capacity is allowed, with a smaller consumption of electrical energy both for operating the pump motor and heating the water.

Several devices are known which allow this aforesaid alternating supply to the two pipes, but these have the disadvantage of having to be controlled from outside the casing in which the water flows, with obvious problems of sealing the casing to the internal pressure exerted by the water at the exit point of the control device.

A further disadvantage is constituted by the phenomena of sticking and blocking of the control device at the sealing points by deposits of starchy substances and other impurities present in the washing water in the form of detritus. In fact, these substances penetrate the sealing points during the washing operation; then, when the water flows out and the internal parts of the electrical appliance dry, the deposited dirt causes the sticking effect; moreover, these devices generally require additional electrical power since the control device is usually driven, in turn, by a small supplementary electric motor or an electromagnet. Furthermore, these devices increase the number of components and hence the cost of the machine.

Examples of unsatisfactory embodiments may be those described in FR-A-2,409,740 (Esswein), in which a device is described for the alternating supply of the two pipes for carrying the water to the rotary manifolds of a dishwashing machine; the device is constituted by a two-way valve located in a tubular part rotatable within the water supply pipe, which is divided into two independent cavities by a transverse partition. The device is rotated by means of a shaft which projects from the casing in which the water flows and is driven by an electric motor. The disadvantages of this embodiment are constituted by the sealing and sticking problems at the point at which the shaft leaves the casing; by the consumption of energy by the electric motor which drives the shaft, and by the increase in the number of components necessary with a consequent increase in the production costs.

In DE-U-7821865 (Licentia) a device is described which allows the two pipes for carrying the water to be supplied alternately; the device is constituted by a slide valve which is articulated on a pin and is located within the casing in which the water flows. The valve has a lever arm and is operated from the exterior by a connecting rod passing through the casing and connected to a piston which reciprocates in a cylindrical seat. The piston is moved by the admission of the water into the cylindrical seat through two tubes which branch from the two pipes carrying the water to the spray nozzles, and terminate at the two ends of the cylindrical seat. The disadvantages of this embodiment are: the problems of sealing and sticking at the exit point of the

- 3 -                                     0057672

connecting rod;  a further phenomenon of sticking of the piston in the cylindrical seat due to detritus in the water introduced into the cylindrical seat, which cannot be expelled;  the increase in working time and costs due to the connection of the branch tubes and the other component parts necessary.

Finally, a device is known from FR-A-2,429,004 which allows the alternating supply of the two rotary manifolds of a dishwashing machine by means of a switching element which is inserted at the point of branching of the delivery pipe into the two supply pipes for the rotary manifolds, and is driven by a radial or axial wheel inserted in the delivery pipe itself and coupled mechanically to the switching element;  the wheel being driven, in turn, by the water flowing through the pipe.

This device has, however, the serious disadvantage of not providing for the need to reduce the number of commutations of the switching element with respect to the rotational speed which the velocity of the water imparts to the wheel.  Without this reduction, given the flow velocity of the water in the delivery pipe, the num--ber of commutations effected by the switching element is too high, having regard to the inertia of the system for conveying the water through the pipes to the rotary manifolds, whereby the effect of the device described above results solely in a general reduction in the pressure of water in the pipes instead of a real alternation of the operation of the two rotary manifolds.

The object of the present invention, therefore, is to overcome the disadvantages mentioned and, in particular, to provide a dishwashing machine with a device which allows the actual alternation of the supply to the pipes carrying water to the rotary manifolds, with--out having the problems of sealing the casing because of the internal pressure exerted by the water;  which is not subject to the problems of sticking and blocking;

which does not require additional electrical power,
with the loss of the saving which it is intended to
achieve, nor even the use of additional components
to drive it, thus reducing the working times and costs
and achieving the maximum energy saving for the operation
of the machine itself.

In order to achieve these objects, the present
invention provides a dishwashing machine comprising
a washdown pump having a delivery pipe from which branch
at least two supply pipes terminating at at least
one lower rotary manifold and at an upper rotary manifold
respectively, the manifolds being located in a washing
chamber and being provided with spray nozzles, and a switch
device for supplying the two pipes alternately, the
switching of which is controlled by the flow of water
in the delivery pipe, characterised in that the switch
device is housed entirely within the pipe for supplying
water to the manifolds so as not to require an external
control for effecting its switching, and includes means
for adjusting the frequency of switching of the switch
device to the flow velocity of the water in the delivery
pipe so as not to alter substantially the pressure
of the water reaching the rotary manifolds.

Further objects and advantages of the invention will
become clear from the following detailed description,
and from the appended drawings, in which:

Figure 1 is a sectional view of the piping for
alternately supplying water to the rotary manifolds of
a dishwashing machine incorporating a switch device
according to the present invention;

Figure 2 is an exploded view in greater detail of
several component parts of the switch device.

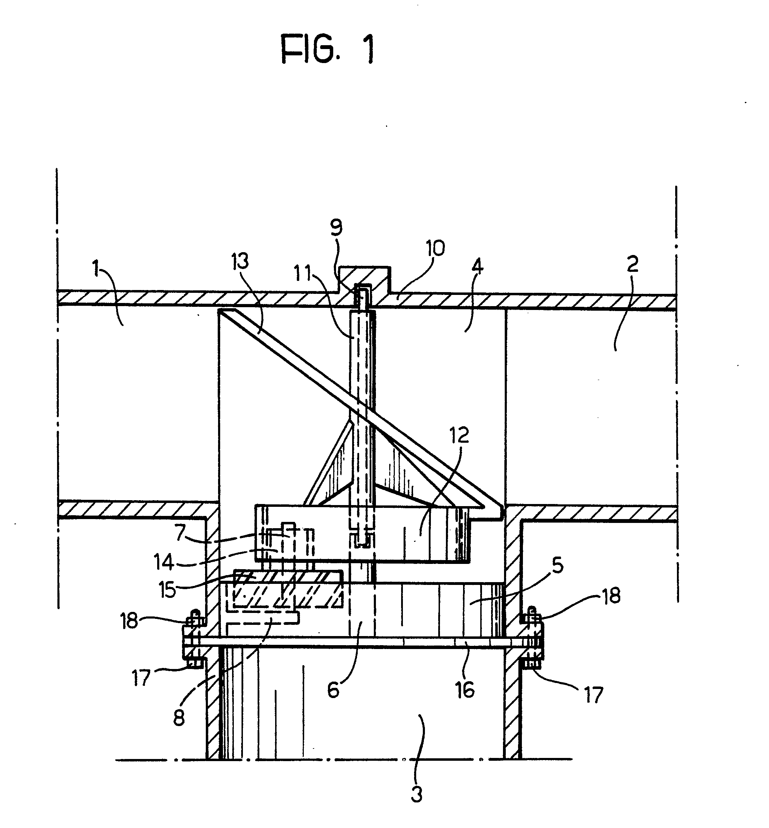

In Figure 1, reference numerals 1 and 2 indicate
two pipes forming part of the piping for the alternating
supply of water to the rotary manifolds in the washing
chamber of a dishwashing machine; the water comes from
a delivery pipe 3 supplied by a circulation pump not shown, just as the junctions of the pipes 1 and 2 with the rest of the piping are not shown.

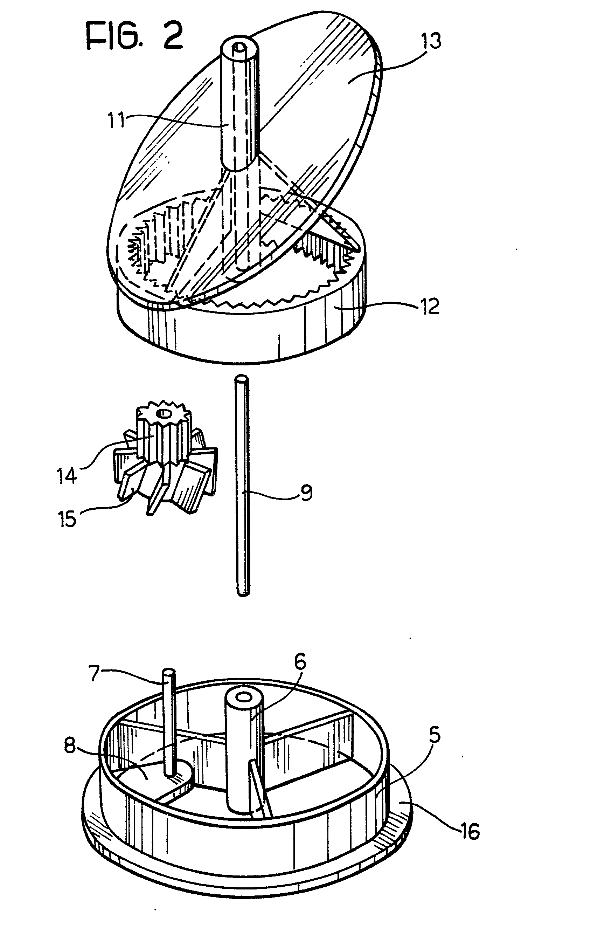

The cylindrical casing, which acts as the branching point for the flow of water from the delivery duct 3 to the pipes leading to the rotary manifolds, has two lateral openings which are connected to the internal part of the pipes 1 and 2. Within this is a device which allows the alternate supply of the pipes 1 and 2, and is best shown in Figure 2. A fixed support 5 has a central stem 6 and a lateral pin 7 supported by a lateral support 8. The upper part of the stem 6 houses the end of a central pin 9, the other end of which is housed in a seat 10 purposely formed in the upper part of the cylindrical casing 4.

A hollow cylinder 11 is rotatable about the pin 9 and supports a ring 12 and a diagonal, elliptical vane 13 which, in the position illustrated in the Figure, prevents the passage of water into the pipe 2 and enables the water from the delivery pipe 3 to pass into the pipe 1. The ring 12 is internally toothed and is meshed with a gear wheel 14 which forms part of a small turbine 15.

The gear wheel 14-turbine 15 assembly is fitted on and rotates about the lateral pin 7. The fixed support 5 has a lateral annulus 16 which can also act as a seal and is captive between the cylindrical casing 4 and the delivery pipe 3, which are then connected together by screws 17 and bolts 18.

In operation of the device, the water which enters the delivery pipe 3 rotates the turbine 15 and hence the gear wheel 14. Consequently, the hollow cylinder 11-ring 12-vane 13 assembly starts to rotate at a speed of rotation which is less than that of the turbine 15 and depends on the ratio between the number of teeth of the gear wheel 14 and the ring 12; in a preferred embodi--ment the gear ratio is 1 to 5, it being verified experimentally that the reduction introduced by the gearing must, in fact, be greater than 2. Hence, the rotation of the vane 13 causes the water coming from the delivery pipe 13 to be deflected alternately towards the pipe 1 or towards the pipe 2. The speed of rotation of the turbine 15 is high since it is determined by the speed of the water reaching its blades, this speed typically being about 2 m/sec, while the speed of rotation required for the vane 13 which determines the frequency of alternation of the flow of water to the pipes 1 and 2, must be much lower, however, so as to allow the maximum water pressure to be reached in each of the two rotary manifolds supplied by the pipes 1 and 2; this is because the water has considerable inertia towards reaching the desired pressure conditions through the various pipes and, therefore, if the vane 13 were to rotate more quickly, only a general reduction in the water pressure in the pipes would occur and not the desired alternation. The ring 12 and gear wheel 14 have resulted from the need for this speed reduction.

On the other hand, it would not be practical to form a rigid turbine 15-vane 13 system: indeed, in this case, for the same water pressure, it would be necessary to reduce the inclination of the blades of the turbine 15 in order to reduce its speed of rotation. Doing this, however, given that the value of the torque is directly proportional to the speed of rotation of the turbine, would reduce the value of the torque on the vane 13 by too great an extent, and this would tend to remain stationary in one of the two positions, towards the pipes 1 and 2, because of the pressure of water thereon. If it were necessary to reduce greatly the gear ratio in order to achieve a greater reduction in the number of alternations of the vane 13, one could consider using a device composed of two meshed gear wheels 14-ring gears 12, similar to those described, connected together in series, thus achieving a double reduction effect.

0057672

From the description given, the advantages of the device which is the subject of the present invention are clear.

In particular, the lack of problems in ensuring a good seal and avoiding sticking of the moving parts, and finally the possibility of varying at will the frequency of the alternation with which the water reaches the two rotary manifolds, without substantially affecting the pressure of the water in the manifolds themselves.

As may readily be noted, numerous variants of the device described by way of example are possible, without departing from the scope of the novel principles residing in the invention.

## CLAIMS

1. Dishwashing machine comprising a washdown pump having a delivery pipe from which branch at least two supply pipes terminating at at least one lower rotary manifold and at an upper rotary manifold respectively, the manifolds being located in a washing chamber and being provided with spray nozzles, and a switch device for supplying the two pipes alternately, the switching of which is controlled by the flow of water in the delivery pipe, characterised in that the switch device is housed entirely within the pipe for supplying water to the manifolds so as not to require an external control for effecting its switching, and includes means for adjusting the frequency of switching of the switch device to the flow velocity of the water in the delivery pipe so as not to alter substantially the pressure of the water reaching the rotary manifolds.

2. Dishwashing machine according to Claim 1, characterised in that the means for adjusting the frequency act to reduce the switching frequency of the device with respect to the switching frequency which the device would have if it were driven directly by the force produced by the flow velocity of the water from the delivery pipe.

3. Dishwashing machine according to Claim 2, characterised in that the reduction in the switching frequency has a reduction ratio greater than 2.

4. Dishwashing machine according to Claim 2, characterised in that the switch device, inserted between the final part of the delivery pipe and the initial part of the two supply pipes, comprises a cylindrical casing (4) having two lateral apertures in correspondence with the initial parts of said two pipes, and containing a diagonal, elliptical vane (13) which rotates about an axis of rotation (9) so as to obstruct alternately the flow of water to one of the two pipes, and effect the switching

0057672

of the flow of water from the delivery pipe to the two supply pipes alternately.

5. Dishwashing machine according to Claim 4, characterised in that the rotary movement of the vane (13) is caused by the water which flows in the switch device by means of a turbine (15) rigidly coupled to a support device (11, 12) for the vane (13).

6. Dishwashing machine according to Claim 5, characterised in that the coupling of the vane (13) and the turbine (15) is achieved by means of a gear wheel (14) fixed to the turbine (15), and a ring gear (12) fixed to the vane (13), in order to effect the adjustment between the number of revolutions of the turbine (15) and the vane (13).

7. Dishwashing machine according to Claim 6, characterised in that the turbine (15) rotates about a pin (7) carried by a support (8) fixed, in its turn, to a fixed support (5) which also supports a stem (6) in the upper part of which is housed an end of a central pin (9), the other end of which is housed in a suitable seat formed in the upper part of the cylindrical casing (4), and about which rotates a hollow cylinder (11) fixed to the vane (13) and the ring gear (12), and that, moreover, about the fixed support (5) is provided a lateral annulus (16) which acts as a seal and is captive between the cylindrical casing (4) and the delivery pipe (3), which are connected together by fixing means (17-18).

8. Dishwashing machine provided with an automatic switch device for supplying the rotary manifolds according to the present description and the appended drawings.

0057672

# FIG. 1

0057672

FIG. 2

13

11

12

14

15

9

7

6

8

5

16